# EUROPEAN PATENT APPLICATION

(11) **EP 3 147 684 A1**
(43) Date of publication of application: **29.03.2017**
(21) Application number: 16807149.6
(22) Date of filing: 28.01.2016
(51) Int. Cl.: G01S 7/51, B60Q 1/52, G01S 17/93, G08G 1/16

(54) **LASER RADAR DEVICE AND DETECTION METHOD**

(30) Priority: 10.06.2015 JP 2015117364
(71) Applicant: JVC KENWOOD Corporation, Yokohama-shi, Kanagawa 221-0022 (JP)
(72) Inventor: SUGAWARA, Takashi, Yokohama-shi Kanagawa 221-0022 (JP)
(74) Representative: Schmidbauer, Andreas Konrad
(86) International application number: PCT/JP2016/052443
(87) International publication number: WO 2016/199442

(57) **Abstract**

A scanning mirror unit (13) two-dimensionally scans with infrared laser light emitted from a first light source unit (Dir), visible laser light emitted from a second light source unit (Db, Dg, Dr), or laser light in which both the laser light are superimposed on each other. A reflected light detection unit (PD2) detects reflected light of infrared laser light emitted via the scanning mirror unit (13). An object recognition unit (22) recognizes an object present within the emission range (2) of infrared laser light based on the reflected light detected by the reflected light detection unit (PD2). When an object is recognized by the object recognition unit (22), the second light source unit (Db, Dg, Dr) emits visible laser light, which is different in accordance with information on the object, toward the object, a neighborhood of the object, or both the object and the neighborhood thereof.

## Description

### [TECHNICAL FIELD]

The present invention relates to a laser radar device that recognizes an object by two-dimensionally scanning with infrared laser light and receiving reflected light, and to a detection method.

### [BACKGROUND ART]

As a method for measuring the distance to an object by using laser light, a TOF (Time of Flight) method is known, in which infrared laser light is emitted in a pulsed manner and the distance to an object is measured from the amount of time delay of reflected light from the object. Because sensing of a large range can be carried out by two-dimensionally scanning with infrared laser light by using a polygon mirror, a MEMS (micro electro mechanical system) mirror, or the like, devices using the method are put in practical use as sensors for detecting distances or obstacles in automotive applications, etc.

### [RELATED ART DOCUMENT]

### [PATENT DOCUMENT]

[PATENT DOCUMENT 1] Japanese Patent Application Publication No. 2011-154324

### [DISCLOSURE OF THE INVENTION]

### [PROBLEM TO BE SOLVED BY THE INVENTION]

Laser radar devices generally display, when detecting an object, such as an obstacle, the object on a monitor as an image. In this case, a user presumes the position or the size of an actual object from the image displayed on the monitor.

However, there may be the case where the distance to an object or the size thereof cannot be actually realized from an image on a monitor. Additionally, when an object and a user are rapidly approaching each other, it is desirable that the user can recognize the approach of the object more intuitively.

The present invention has been made in view of these situations, and a purpose of the invention is to provide a technique in which a user is caused to recognize the object detected by a laser radar more intuitively.

### [MEANS FOR SOLVING THE PROBLEM]

In order to solve the aforementioned problems, a laser radar device (1) according to an aspect of the present invention comprises: a first light source unit (Dir) that emits infrared laser light; a second light source unit (Db, Dg, Dr) that emits visible laser light; a scanning mirror unit (13) that two-dimensionally scans with infrared laser light emitted from the first light source unit (Dir), visible laser light emitted from the second light source unit (Db, Dg, Dr), or laser light in which both the laser light are superimposed on each other; a reflected light detection unit (PD2) that detects reflected light of infrared laser light emitted via the scanning mirror unit (13) ; and an object recognition unit (22) that recognizes an object present within an emission range of the infrared laser light, based on the reflected light detected by the reflected light detection unit (PD2). When an object is recognized by the object recognition unit (22), the second light source unit (Db, Dg, Dr) emits visible laser light, which is different in accordance with information on the object, toward the object, a neighborhood of the object, or both the object and the neighborhood thereof.

Another aspect of the present invention is a detection method. The method comprises the steps of: two-dimensionally scanning with infrared laser light emitted from an infrared light source unit (Dir) via a scanning mirror unit (13); detecting reflected light of infrared laser light emitted via the scanning mirror unit (13) ; recognizing an object present within an emission range of the infrared laser light based on the detected reflected light; and emitting, when the object is recognized, visible laser light, which is different in accordance with information on the object, from a visible light source unit (Db, Dg, Dr) toward the object, a neighborhood of the object, or both the object and the neighborhood thereof.

Optional combinations of the aforementioned constituting elements, and implementations of the invention in the form of methods, apparatuses, systems, or the like may also be practiced as additional modes of the present invention.

### [ADVANTAGE OF THE INVENTION]

According to the present invention, a user can be caused to recognize the object detected by a laser radar more intuitively.

### [BRIEF DESCRIPTION OF THE DRAWINGS]

Fig. 1 is a view illustrating a configuration of a laser radar device according to an embodiment of the present invention;
Fig. 2 is a view schematically illustrating an example of the case where a laser radar device according to an embodiment is used in an automotive application;
Fig. 3 is a view illustrating one example of a reference table to be built in an object recognition unit according to Example 1;
Figs. 4(a) and 4(b) are views illustrating examples of a result of detecting objects and emission data, respectively, according to Example 1;
Fig. 5 is a flowchart for explaining the operations of a laser radar device according to Example 1;
Fig. 6 is a view illustrating one example of a reference table to be built in an object recognition unit according to Example 2;
Figs. 7(a) and 7(b) are views illustrating examples of a result of detecting objects and emission data, respectively, according to Example 2;
Fig. 8 is a flowchart for explaining the operations of a laser radar device according to Example 2;
Figs. 9(a) and 9(b) are views illustrating examples of a result of detecting objects and emission data, respectively, according to Example 3;
Fig. 10 is a flowchart for explaining the operations of a laser radar device according to Example 3;
Figs. 11(a) and 11(b) are views illustrating examples of a result of detecting an object and emission data, respectively, according to Example 4;
Figs. 12 (a) and 12 (b) are views illustrating other examples of a result of detecting an object and emission data, respectively, according to Example 4; and
Fig. 13 is a flowchart for explaining the operations of a laser radar device according to Example 4.

### [MODE FOR CARRYING OUT THE INVENTION]

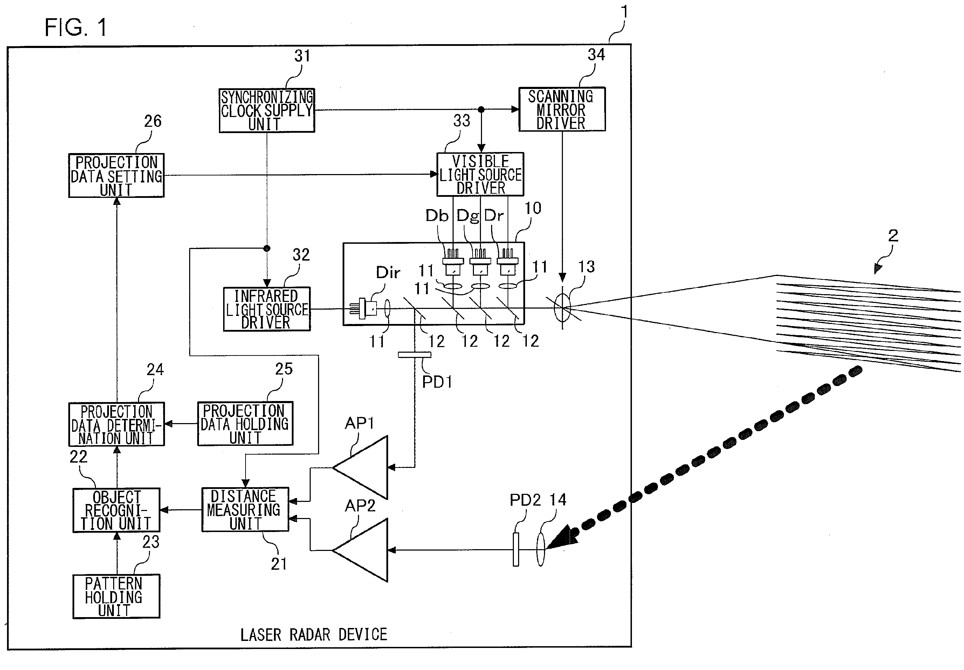

Fig. 1 is a view illustrating a configuration of a laser radar device 1 according to an embodiment of the present invention. The laser radar device 1 comprises a laser light source unit 10, and the laser light source unit 10 includes a visible laser light source unit that emits visible laser light and an infrared laser light source unit that emits infrared laser light. Fig. 1 illustrates an example in which a three-primary color laser light source (blue laser diode Db, green laser diode Dg, red laser diode Dr) is used as a visible laser light source.

A collimator lens 11 is arranged at an emission portion of the blue laser diode Db, so that blue collimated light (almost parallel light) is generated. Similarly, a collimator lens 11 is arranged at an emission portion of the green laser diode Dg, so that green collimated light (almost parallel light) is generated. Similarly, a collimator lens 11 is arranged at an emission portion of the red laser diode Dr, so that red collimated light (almost parallel light) is generated. Similarly, a collimator lens 11 is arranged at an emission portion of an infrared laser diode Dir, so that infrared collimated light (almost parallel light) is generated.

The laser light respectively emitted from the three-primary color laser light source and the infrared laser light source are combined with the light axes of the respective laser light being adjusted to be on almost the same axis after passing through four dichroic mirrors 12. The laser beam light combined on almost the same axis enters a deflection mirror 13.

The blue laser diode Db, the green laser diode Dg, and the red laser diode Dr are driven by a visible light source driver 33, and each of the diodes is independently controlled to be turned on or turned off. The infrared laser diode Dir is driven by an infrared light source driver 32, and is controlled to be turned on or turned off. Accordingly, the laser light source unit 10 can emit infrared laser light, visible laser light, or laser light in which both the laser light are superimposed on each other.

The deflection mirror 13 is a two-axis deflection mirror turnable around two axes, and a MEMS mirror or a polygon mirror can be used as the mirror 13. In the following description, an example is assumed, in which a MEMS mirror that can perform faster and fine scanning is used. The deflection mirror 13 performs two-dimensional scanning by reflecting the laser light emitted from the laser light source unit 10. In the following description, an example is assumed, in which raster scanning is performed as the two-dimensional scanning. Alternatively, Lissajous scanning may be used instead of raster scanning.

The laser light used in raster scanning by the deflection mirror 13 is projected outside from a non-illustrated projection port. The laser light projected from the projection port is reflected on the surface of an object, when the object is present in a space in the direction in which the laser light is projected. The projection direction is varied in accordance with an application in which the laser radar device 1 is used, and when the laser radar device 1 is used for detecting an object ahead of a vehicle, a wide range ahead of the vehicle is two-dimensionally scanned by projecting laser light toward the front of the vehicle. The obj ect detected in this case is a person, another vehicle, a building, or the like. When only infrared laser light is projected, a person cannot visually observe it. Fig. 1 schematically illustrates the raster scanning trajectories of the laser light within an emission range 2 of laser light.

The infrared laser light emitted from the infrared laser diode Dir is branches at the dichroic mirror 12 in the first stage, and enters a reference light detector PD1. The reference light detector PD1 converts the incident infrared laser light into an electrical signal (hereinafter, referred to as a reference signal), and outputs it. An amplifier AP1 amplifies the reference signal output from the reference light detector PD1.

The infrared laser light emitted from the infrared laser diode Dir is also emitted outside via the deflection mirror 13. The emitted infrared laser light is reflected when hitting the surfaces of various matters present outside. A condenser lens 14 condenses the reflected infrared laser light. A reflected light detector PD2 converts the reflected infrared laser light that enters via the condenser lens 14 into an electrical signal (hereinafter, referred to as a detection signal), and outputs it. An amplifier AP2 amplifies the detection signal output from the reflected light detector PD2. Herein, an erroneous detection operation can be reduced by arranging a non-illustrated optical filter, such as one for transmitting infrared light beams and blocking visible light, in the preceding step of the reflected light detector PD2.

A synchronizing clock supply unit 31 includes an oscillator, such as a crystal oscillator, and generates a synchronizing signal from an output signal of the oscillator. The synchronizing clock supply unit 31 supplies the generated synchronizing signal to the infrared light source driver 32, the visible light source driver 33, a scanning mirror driver 34, and a distance measuring unit 21.

The scanning mirror driver 34 performs raster scanning control on the deflection mirror 13 based on the synchronizing signal supplied from the synchronizing clock supply unit 31. That is, the scanning mirror driver 34 moves a scanning position sequentially from the left upper end toward the right lower end of a scanning region. Specifically, the scanning region is updated sequentially from left to right in an X-axis direction (main scanning direction), and when the scanning position reaches the right end, a scanning region located one row down in a Y-axis direction (sub-scanning direction) is updated. By repeating this processing, the scanning position reaches the right lower end of the scanning region. When the scanning position reaches the right lower end, the raster scanning for one frame is completed and the raster scanning for the next frame starts from the left upper end. The raster scanning is performed, for example, for 60 frames for one second. Herein, a frame rate is not limited to 60 Hz, and may be 15 Hz, 30 Hz, 120 Hz, or the like.

The infrared light source driver 32 makes the infrared laser diode Dir emit light in a pulsed manner, based on the synchronizing signal supplied from the synchronizing clock supply unit 31. The infrared laser light emitted from the infrared laser diode Dir is detected by the reference light detector PD1 as reference light. After emitted in the raster scanning by the deflection mirror 13, the infrared laser light is reflected on the surface of a matter present within the emission range 2 and is detected by the reflected light detector PD2 as reflected light.

The reference signal detected by the reference light detector 1 as reference light is amplified by the amplifier AP1, and is output to the distance measuring unit 21. The detection signal detected by reflected light detector PD2 as reflected light is amplified by the amplifier AP2, and is output to the distance measuring unit 21.

The distance measuring unit 21 measures the distance between the laser radar device 1 and a reflection point, based on an amount of time delay of a detection signal with respect to a reference signal (TOF (Time of Flight) method). Because the same synchronizing signal is input to the infrared light source driver 32, the scanning mirror driver 34, and the distance measuring unit 21, the distance measuring unit 21 can detect how many clocks the detection signal is delayed by for each scanning position, thereby allowing the distance to a reflection point in each scanning position to be estimated based on the number of delayed clocks. The distance measuring unit 21 outputs the distance information in each scanning position to an object recognition unit 22.

The object recognition unit 22 compares the distance input from the distance measuring unit 21 with a set distance, and when the input distance is smaller than or equal to the set distance, it recognizes the existence of an object. The set distance is set to a distance smaller than the distance to a reflection point in a state where an obstacle is not present (e. g. , the ground or a wall). The distance to the reflection point is varied in accordance with the position where the laser radar device 1 is installed or the location where the device-1 is used.

The object recognition unit 22 generates distance map data in which the distance information in each scanning position are mapped for each frame. The object recognition unit 22 specifies the position and shape of an object based on the distance map data. When the detected distances in adjacent scanning positions are close to each other, the objects are determined to be identical.

A pattern holding unit 23 holds identifying pattern data for various objects. The pattern holding unit 23 holds, for example, identifying pattern data for a pedestrian, an automobile, and the like. The object recognition unit 22 compares the shape of an object detected from the distance map data with the pattern data held in the pattern holding unit 23, and determines the type of the object. For this comparison, a general pattern matching algorithm may be used, and the algorithm is not particularly limited.

When an object is recognized in a frame, the object recognition unit 22 supplies the generated distance map data for the frame to a projection data determination unit 24. When the type of an object is determined, the type thereof is also supplied to the projection data determination unit 24.

The projection data determination unit 24 determines the projection data for the next frame, based on the distance map data supplied from the object recognition unit 22. For example, color data is assigned to each scanning position in accordance with the distance information in each scanning position. In principle, infrared data is assigned to a scanning position where an object is not present, and color data is assigned to a scanning position where an object is present. In that case, color data is determined in accordance with the distance to the object. For example, as the distance is smaller, a more conspicuous color may be assigned. Infrared laser light may be output continuously even in a scanning position where an object is present.

In the aforementioned assignment method, visible laser light is to be emitted to an object. Herein, it is not necessary that the position irradiated with the visible laser light completely matches the position of the object, and visible laser light may be emitted to a range wider than an object. In that case, color data in accordance with the distance to the object is assigned also to a neighborhood of a scanning position where an object is present, in a frame.

Color data may be determined in accordance with the shape of an object, not determined in accordance with the distance to an object as described above. In the present description, "the shape of an obj ect" is a concept including "the size of an object. " Accordingly, even two objects having similar shapes are defined to be different objects when they have different sizes. For example, as an object has a larger size, a more conspicuous color may be assigned. Alternatively, color data may be determined in accordance with the type of an object.

In the aforementioned assignment method, plain color data is assigned to a scanning position where an object is present, in a frame; however, image data including a specific pattern, mark, character, or the like, may be assigned to a scanning position where an object is present. The image data may include a message to a user of the laser radar device 1. When an object is a person, the image data may include a message to the person. These image data are held in a projection data holding unit 25.

It is not necessary that the position to which the image data is assigned completely matches the position of an object, and the former position may be misaligned from the latter position (e.g., the former position may be near an object). Alternatively, the former position may be within a wide range including an object. For example, when the object is a person, image data may be assigned to a position other than a head range, from the viewpoint of human eye-safe.

Similarly to the above description, the content of the image date may be determined in accordance with the distance to an object, or determined in accordance with the shape of an object. Additionally, the contents of the image data may be determined in accordance with the type of an object. For example, a content in which the type of an object is reflected may be determined as the image data. For example, image date of a mark indicating the type of an object or image date including a message in accordance with the type of an object may be determined.

The projection data determination unit 24 supplies the projection data determined for each frame to a projection data setting unit 26. The projection data setting unit 26 sets the supplied projection data in the visible light source driver 33. The visible light source driver 33 drives the blue laser diode Db, the green laser diode Dg, and the red laser diode Dr in accordance with the set projection data. For example, in the scanning position to which red data is set as the projection data, the red laser diode Dr is turned on, and the blue laser diode Db and the green laser diode Dg are turned off.

In each laser diode, the gradation of the color can be controlled by controlling an application voltage. In a configuration in which such gradation control can be performed, a broader variety of colors can be reproduced.

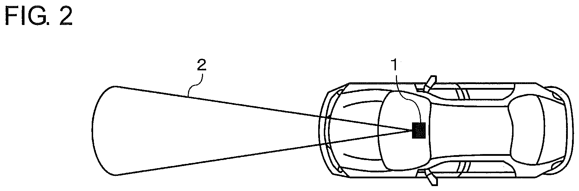

Hereinafter, an example will be described, in which the laser radar device 1 according to the present embodiment is applied. Fig. 2 is a view schematically illustrating an example of the case where the laser radar device 1 according to the embodiment is used in an automotive application. In Fig. 2, the laser radar device 1 is installed inside the windshield of a vehicle. The position where the laser radar device 1 is installed is not particularly limited as far as the front side of a vehicle is included within the emission range 2, and the device 1 may be installed inside a front bumper, a front grille, or the like.

In this application, infrared laser light is always projected to the emission range 2, and when an object is detected within the emission range 2, visible laser light is emitted toward the object, a neighborhood of the object, or both the object and the neighborhood thereof. Because only infrared laser light is being projected while an object is not detected, a driver can perform driving operations without being conscious of the projection of laser light from the laser radar device 1. When an object, such as a pedestrian, bicycle, leading vehicle, oncoming vehicle, or obstacle, is detected ahead of a vehicle, the object is illuminated by visible light in principle. Such control is effective particularly during night driving, and a driver can instantly and accurately grasp the position of an object by illuminating the object with visible light.

### (Example 1)

Hereinafter, Example 1 will be described, in which the laser radar device 1 is used in an automotive application. Example 1 is an example in which, in accordance with the distance to an object recognized by the obj ect recognition unit 22, visible laser light, having a color set in advance for the object, is emitted. It is not necessary to determine the type of an object in Example 1, and hence the pattern holding unit 23 can be omitted. Additionally, because plain visible laser light is emitted to an object, it is not necessary to hold image data to be projected, and hence the projection data holding unit 25 can also be omitted.

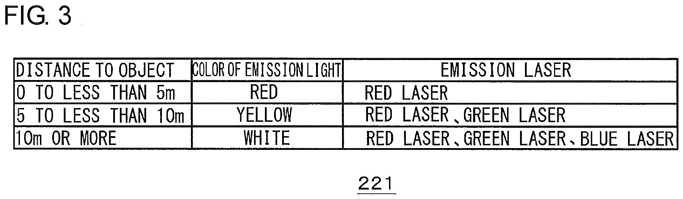

Fig. 3 is a view illustrating one example of a reference table 221 to be built in the object recognition unit 22 according to Example 1. The reference table 221 is one in which the distance between the laser radar device 1 and an object, measured by the distance measuring unit 21, and the color of the laser light to be emitted from the visible laser light source are associated with each other.

In the example illustrated in Fig. 3, it is set that: when the distance to an object is less than 5 m, red laser light is emitted; when the distance is 5 m or more but less than 10 m, yellow laser light is emitted; and when the distance is 10 m or more, white laser light is emitted. This is set such that, as the distance between a vehicle and an object is smaller, the object is illuminated with a color that draws a driver's attention more strongly.

When red laser light is selected, the visible light source driver 33 turns on the red laser diode Dr and turns off the blue laser diode Db and the green laser diode Dg. When yellow laser light is selected, the visible light source driver 33 turns on the green laser diode Dg and the red laser diode Dr and turns off the blue laser diode Db. When white laser light is selected, the visible light source driver 33 turns on all of the red laser diodes Dr, the green laser diodes Dg, and blue laser diodes Db.

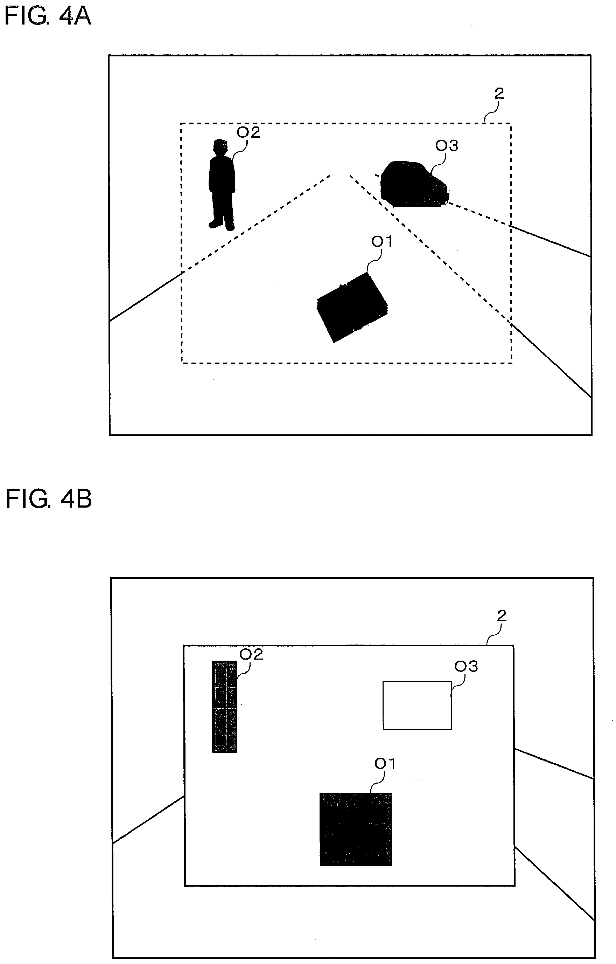

Figs. 4(a) and 4(b) are views illustrating examples of a result of detecting objects and emission data, respectively, according to Example 1. Fig. 4(a) illustrates distance map data within the emission range 2. This distance map data is generated based on the reflected light of infrared laser light. In the example illustrated in Fig. 4(a), three objects, including a first object (fallen object: cardboard) O1, a second object (person) O2, and a third object (oncoming vehicle) O3, are detected. In Example 1, the type of an object is not basically determined, and hence the object recognition unit 22 does not specify the types of the objects.

The distance between the first object O1 and the laser radar device 1 is less than 5 m, and the projection data determination unit 24 assigns red data to the scanning position for the first object O1. The distance between the second object O2 and the laser radar device 1 is 5 m or more but less than 10 m, and the projection data determination unit 24 assigns yellow data to the scanning position for the second object O2. The distance between the third object O3 and the laser radar device 1 is 10 m or more, and the projection data determination unit 24 assigns white data to the scanning position for the third object O3. The projection data determination unit 24 sends, as projection data, assignment information on color data to the projection data setting unit 26, and the projection data setting unit 26 sets the projection data in the visible light source driver 33.

Fig. 4(b) illustrates an emission pattern of the laser light emitted from the laser light source unit 10. Red laser light is emitted to the position where the first object O1 is present; yellow laser light is emitted to the position where the second object O2 is present; and white laser light is emitted to the position where the third object O3 is present. Only infrared laser light is emitted to the other positions. Infrared laser light is also emitted to the positions where the first object O1, the second object O2, and the third object O3 are present, respectively.

Fig. 4(b) illustrates an example in which visible laser light is emitted to minimum rectangular regions each including each object; however, visible laser light may be emitted to the same region as the shape of each object. A situation is created during night driving, in which each object is irradiated with spotlight having a color in accordance with a distance, and hence a driver can intuitively grasp the position and sense of distance of an object.

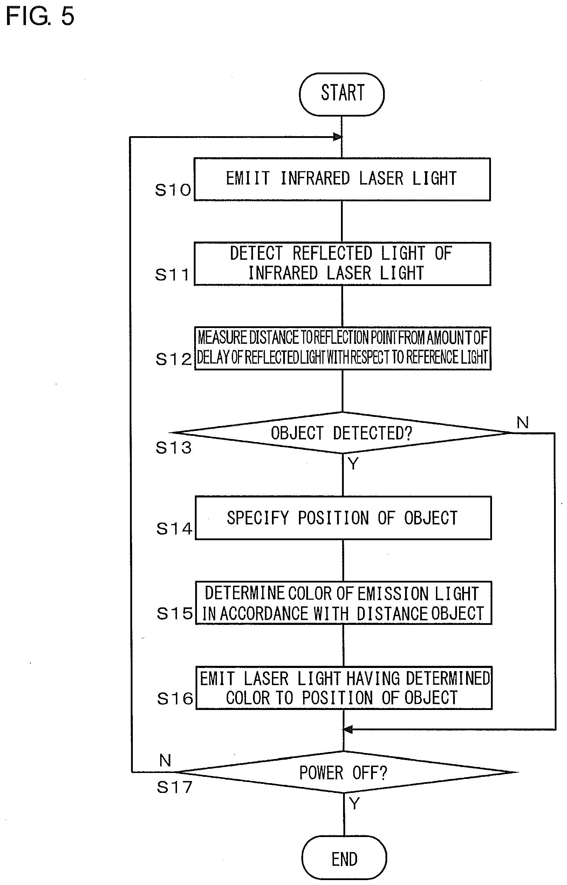

Fig. 5 is a flowchart for explaining the operations of the laser radar device 1 according to Example 1. The infrared laser light source projects infrared laser light to a predetermined emission range ahead of a vehicle (S10). The reflected light detector PD2 detects the reflected light of the infrared laser light (S11). The distance measuring unit 21 detects an amount of delay of the reflected light of the infrared laser light with respect to reference light, and the object recognition unit 22 measures the distance to a reflection point from the amount of delay (S12).

The object recognition unit 22 detects an object based on the distance to a reflection point (S13). When a scanning position, in which the distance to a reflection point is smaller than a set distance, is detected, the object recognition unit 22 determines that an object has been detected. In order to remove noise, it may be determined that an object has been detected, when a cluster of scanning positions in each of which the distance to a reflection point is smaller than the set distance appear, the cluster including a certain number or more of scanning positions.

When an object is detected (S13/Y), the object recognition unit 22 specifies the scanning position for the obj ect (S14). The projection data determination unit 24 determines the color of emission light in accordance with the distance to the detected object (S15). The projection data setting unit 26 sets, as projection data, the determined color data in the scanning position for the object. The visible light source driver 33 drives the visible laser light source based on the projection data (S16).

When an object is not detected in Step S13 (S13/N), the processing from Step S14 to Step S16 are skipped. The processing from Step S10 to Step S16, which have been described above, are repeated while the laser radar device 1 is being powered (S17/N), and when the laser radar device 1 is turned off (S17/Y), the processing end. Additionally, the processing from Step S10 to Step S16 are executed for every frame in raster scanning, and hence when the relative distance between a vehicle and an object is changed due to the driving of the vehicle or the movement of the object, etc., the color of the emission light is also changed in accordance with the change.

According to Example 1, infrared laser light is projected to a predetermined range ahead of a vehicle, so that an object is recognized from the reflected light of the infrared laser light, as described above. When an object is detected, visible laser light, having a color in accordance with the distance to the object, is emitted to the object or both the object and a neighborhood thereof. Thereby, a user can be caused to recognize the obj ect detected by the laser radar more intuitively. A driver can directly recognize the position and size of an object without depending on a display.

Further, a driver can understand a degree of urgency by color with visible light having a more conspicuous color being emitted to an object that is closer to a vehicle. Furthermore, a configuration is adopted in which the visible laser light source and the infrared laser light source share an optical system including the deflection mirror 13, and hence cost can be reduced to a lower level in comparison with the case where both laser light sources are respectively configured with discrete optical systems. Still furthermore, the above configuration also contributes to the miniaturization of the laser radar device 1. Still furthermore, a misalignment between the position where an object is detected and the position to which visible laser light is to be emitted can be reduced.

### (Example 2)

Subsequently, Example 2 will be described, in which the laser radar device 1 is used in an automotive application. Example 2 is an example in which, in accordance with the type of an object recognized by the object recognition unit 22, visible laser light, having a color set in advance for the object, is emitted. Also in Example 2, plain visible laser light is emitted to an object, and hence it is not necessary to hold image data to be projected, thereby allowing the projection data holding unit 25 to be omitted.

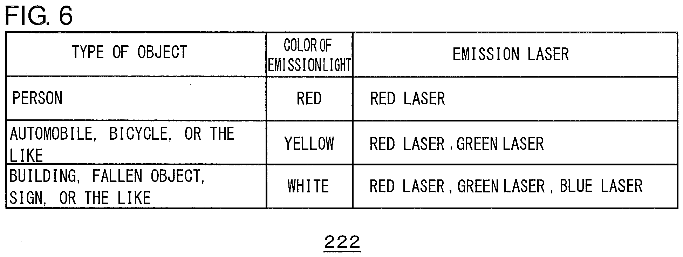

Fig. 6 is a view illustrating one example of a reference table 222 to be built in an object recognition unit 22 according to Example 2. The reference table 222 is a table in which the type of an object recognized by the object recognition unit 22 and the color of laser light to be emitted from a visible laser light source are associated with each other.

In the example illustrated in Fig. 6, it is set that: when an object is a person, red laser light is emitted; when an object is an automobile, a bicycle, or the like, yellow laser light is emitted; and when an object is a building, a fallen object, a sign, or the like, white laser light is emitted. This is set such that, as the necessity of avoiding a collision with a vehicle is higher, an object is illuminated with a color that draws a driver's attention more strongly.

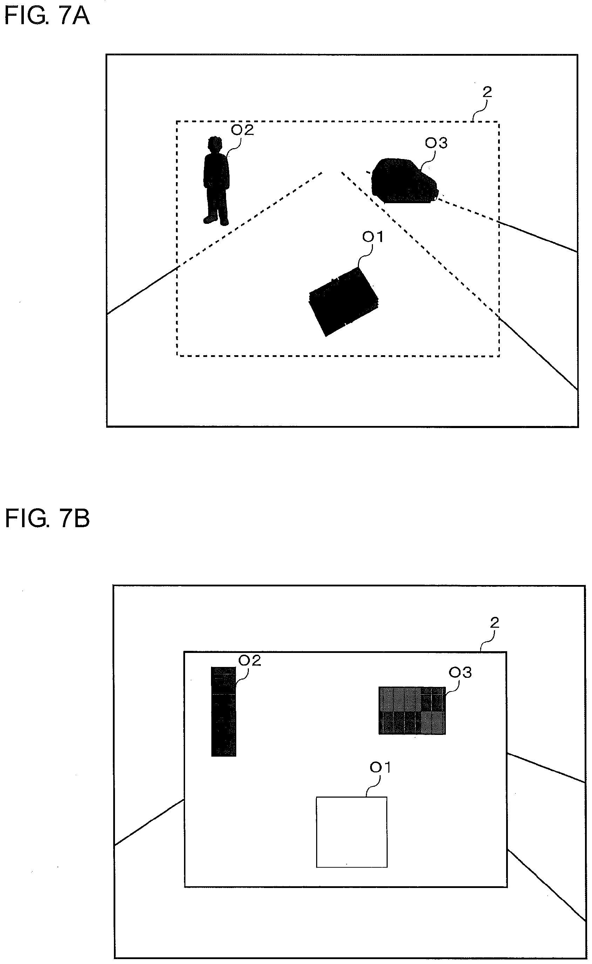

Figs. 7(a) and 7(b) are views illustrating examples of a result of detecting objects and emission data, respectively, according to Example 2. Fig. 7(a) is the same as the distance map data illustrated in Fig. 4(a). In Example 2, the object recognition unit 22 specifies the type of an object by using the pattern data held in the pattern holding unit 23.

A first object O1 is a fallen object (cardboard), and the projection data determination unit 24 assigns white data to the scanning position for the first object O1. A second object O2 is a person, and the projection data determination unit 24 assigns red data to the scanning position for the second object O2. A third object O3 is an automobile, and the projection data determination unit 24 assigns yellow data to the scanning position for the third object O3. The projection data determination unit 24 sends, as projection data, assignment information on color data to the projection data setting unit 26, and the projection data setting unit 26 sets the projection data in the visible light source driver 33.

Fig. 7(b) illustrates an emission pattern of the laser light emitted from the laser light source unit 10. White laser light is emitted to the position where the first object O1 is present; red laser light is emitted to the position where the second object O2 is present; and yellow laser light is emitted to the position where the third object O3 is present. Only infrared laser light is emitted to the other positions.

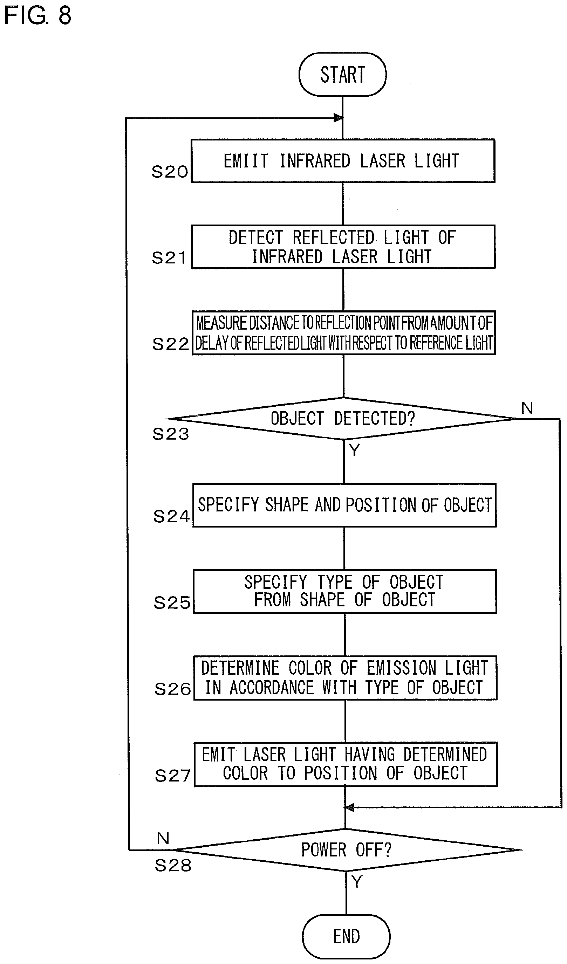

Fig. 8 is a flowchart for explaining the operations of the laser radar device 1 according to Example 2. An infrared laser light source projects infrared laser light to a predetermined emission range ahead of a vehicle (S20). The reflected light detector PD2 detects the reflected light of the infrared laser light (S21). The distance measuring unit 21 detects an amount of delay of the reflected light of the infrared laser light with respect to reference light, and the object recognition unit 22 measures the distance to a reflection point from the amount of delay (S22).

When a scanning position where the distance to a reflection point is smaller than a set distance appears, the object recognition unit 22 determines that an object has been detected (S23). When an object is detected (S23/Y), the object recognition unit 22 specifies the scanning position for the object and the shape of the object (S24) . As the shape of the object, the object recognition unit 22 extracts, for example, the outline of the obj ect from distance map data. The obj ect recognition unit 22 specifies the type of the object from the shape of the object with reference to the pattern holding unit 23 (S25). The projection data determination unit 24 determines the color of emission light in accordance with the specified type of the object (S26). The projection data setting unit 26 sets, as projection data, the determined color data in the scanning position for the object. The visible light source driver 33 drives the visible laser light source based on the projection data (S27).

The processing from Step S20 to Step S27 are executed every one frame in raster scanning; however, the processing of Step S23 in which an object is detected, and the processing of Step S24 and Step S25 in which the shape and the type of the object are respectively specified, may be executed at intervals, such as, for example, every 5 to 10 frames, once the type of the object is specified.

Also in the present example, the distance to an object is measured similarly to Example 1, and when the relative distance is smaller than a predetermined distance, for example, smaller than 5 m, or the like, due to the driving of a vehicle or the movement of the detected object, processing, in which projection of light and stop of the projection are repeated, or the like, may be executed, for example, every 5 to 10 frames such that emission light, having a color corresponding to the object, is seen as flickering.

When an object is not detected in Step S23 (S23/N), the processing from Step S24 to Step S27 are skipped. The processing from Step S20 to Step S27, which have been described above, are repeatedly executed while the laser radar device 1 is being powered (S28/N), and when the laser radar device 1 is turned off (S28/Y), the processing end.

According to Example 2, the same advantages as in Example 1 can be obtained, as described above. Further, a driver can understand a degree of urgency by emitting visible light having a more conspicuous color to an object to which a stronger request for avoiding a collision is to be made.

### (Example 3)

Subsequently, Example 3 will be described, in which the laser radar device 1 is used in an automotive application. Example 3 is an example in which visible laser light is emitted such that a display, in which the type of an object recognized by the object recognition unit 22 is reflected, is formed. In Example 3, it is necessary to hold image data to be projected, and hence the projection data holding unit 25 becomes indispensable.

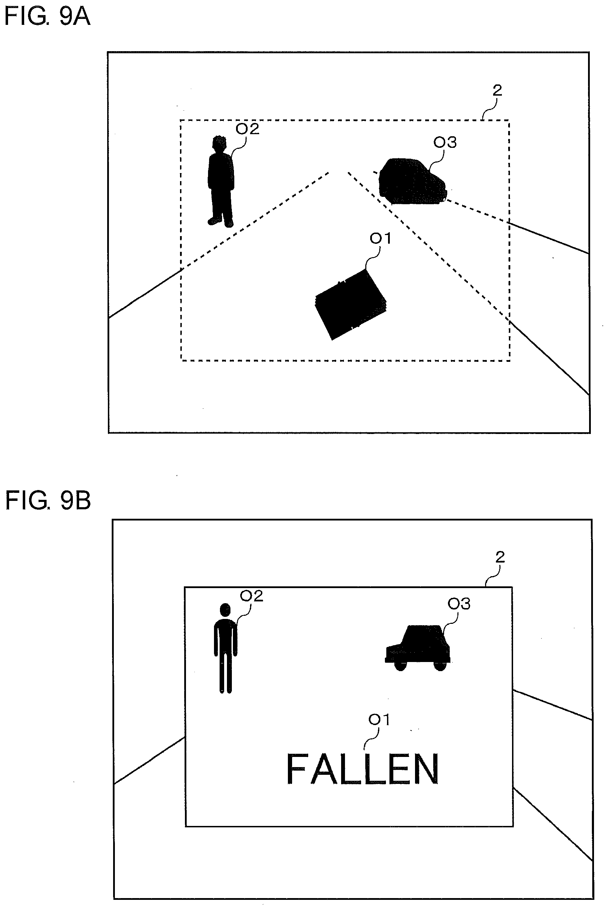

Figs. 9(a) and 9(b) are views illustrating examples of a result of detecting objects and emission data, respectively, according to Example 3. Fig. 9(a) is the same as the distance map data illustrated in each of Figs. 4(a) and Fig. 7(a). Also in Example 3, the object recognition unit 22 specifies the type of an object by using the pattern data held in the pattern holding unit 23.

A first object O1 is a fallen object (cardboard), and the projection data determination unit 24 assigns image data including the character of "FALLEN" or text data of "FALLEN" to the scanning position for the first object O1. A second object O2 is a person, and the projection data determination unit 24 assigns image data of a mark depicting a person to the scanning position for the second object O2. A third object O3 is an automobile, and the projection data determination unit 24 assigns image data of a mark depicting an automobile to the scanning position for the third object O3. The projection data determination unit 24 sends, as projection data, image data or text data to the projection data setting unit 26, and the projection data setting unit 26 sets projection data in the visible light source driver 33 based on the image data or the text data.

Fig. 9(b) illustrates an emission pattern of the laser light emitted from the laser light source unit 10. The character of "FALLEN" is projected to the position where the first object O1 is present; a mark depicting a person is projected to the position where the second object O2 is present; and a mark depicting an automobile is projected to the position where the third object O3 is present. Only infrared laser light is emitted to the other positions.

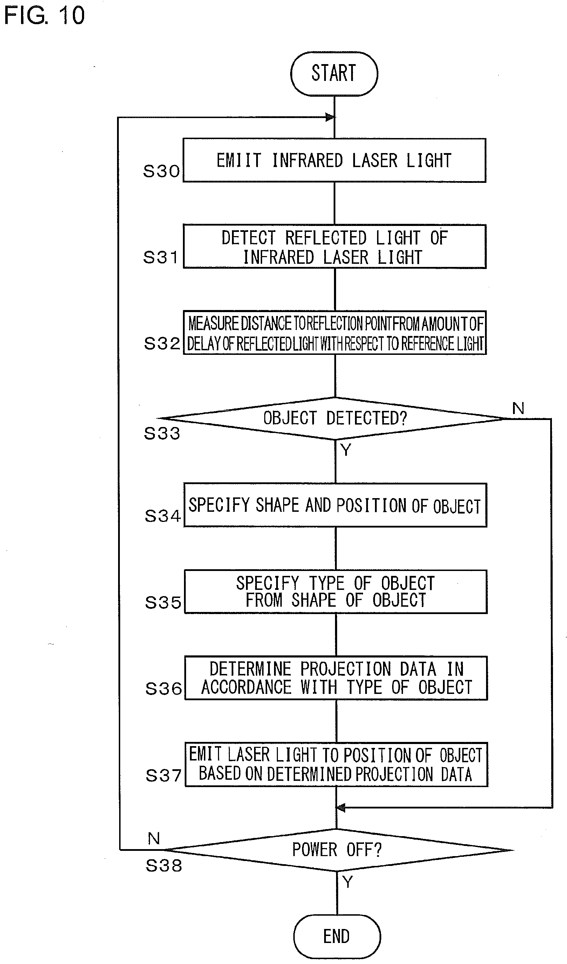

Fig. 10 is a flowchart for explaining the operations of the laser radar device 1 according to Example 3. The processing from Step S30 to Step S38 in the flowchart of Fig. 10 are common to the processing from Step S20 to Step S28 in the flowchart of Fig. 8, except for the processing of Step S36 and Step S37. In Step S36, the projection data determination unit 24 determines emission data in accordance with the type of an object specified by the object recognition unit 22 (S36). The projection data setting unit 26 sets the determined projection data in the scanning position for the obj ect. The visible light source driver 33 drives the visible laser light source based on the projection data (S37). Also in the present example, when the relative distance to an object is smaller than a predetermined distance, as in Example 2, the processing, such as one in which an emission pattern is seen as flickering, may be executed.

According to Example 3, the same advantages as in Example 1 can be obtained, as described above. Further, a driver can be caused to intuitively grasp the position and type of an object by projecting a mark or a character, in which the type of the object is reflected, to the object.

### (Example 4)

Subsequently, Example 4 will be described, in which the laser radar device 1 is used in an automotive application. Example 4 is an example in which visible laser light is emitted such that a display, in which the moving direction of an object recognized by the object recognition unit 22 is reflected, is formed. Alternatively, the display may reflect the type of an object.

In Example 4, the object recognition unit 22 detects the motion vector of an object by detecting a difference between the position of the object detected in the present frame (present distance map data) and the position of the object detected in the past frame (past distance map data). The object recognition unit 22 can estimate the moving speed of the object by sequentially detecting a motion vector between two successive frames and by calculating the mean value of the detected motion vectors.

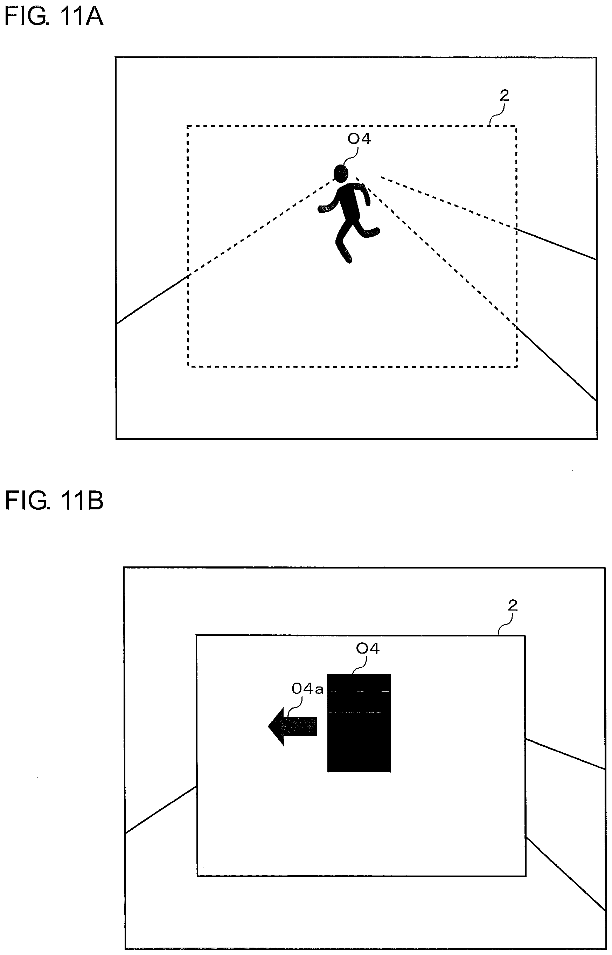

Figs. 11 (a) and 11 (b) are views illustrating examples of a result of detecting an object and emission data, respectively, according to Example 4. In Fig. 11(a), a fourth object (person) O4 is detected in distance map data within an emission range 2. The object recognition unit 22 detects that the moving direction of the fourth obj ect O4 is oriented from right to left, by detecting the positions of the fourth object O4 between successive distance map data. Additionally, the object recognition unit 22 detects the moving speed of the fourth object O4 from the motion vectors of the fourth object 04 that are continuously detected.

The projection data determination unit 24 assigns predetermined color data (e. g. , red data) to the scanning position for the fourth object O4, and assigns image data of an arrow indicating the traveling direction of the fourth object O4 to the left side of the scanning position for the fourth object O4. Alternatively, image data of a mark depicting a person may be assigned to the scanning position for the fourth object O4. The position to which the image data of an arrow is to be assigned is adjusted in accordance with the moving speed of the fourth object O4. The projection data determination unit 24 sends, as projection data, assignment information on color data and image data to the projection data setting unit 26, and the projection data setting unit 26 sets the projection data in the visible light source driver 33.

Fig. 11(b) illustrates an emission pattern of the laser light emitted from the laser light source unit 10. Red laser light is emitted to the position where the fourth object O4 is present, and an arrow mark O4a is projected to the road surface on the left side of the fourth object O4. Only infrared laser light is emitted to the other positions.

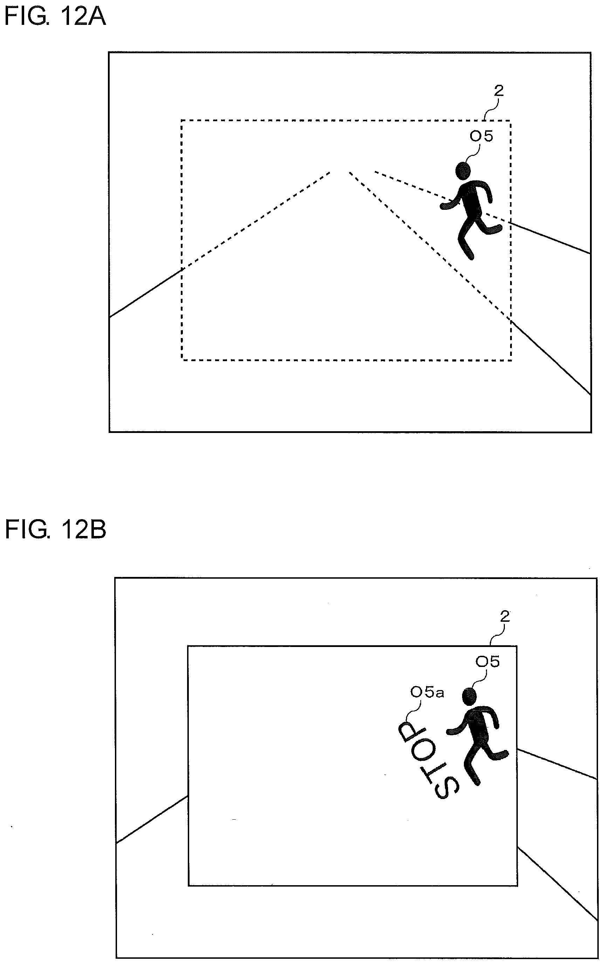

Figs. 12(a) and 12(b) are views illustrating other examples of a result of detecting an object and emission data, respectively, according to Example 4. In Fig. 12(a), a fifth object (person) O5 is detected in distance map data within an emission range 2. The object recognition unit 22 detects that the moving direction of the fifth object O5 is oriented from right to left, by detecting the positions of the fifth obj ect O5 between successive distance map data. Additionally, the object recognition unit 22 detects the moving speed of the fifth object O5 from the motion vectors of the fifth object O5 that are continuously detected.

The projection data determination unit 24 assigns image data of a mark depicting a person to the scanning position for the fifth object O5, and assigns image data including the characters of "STOP" or text data of "STOP" to the left side of the scanning position for the fifth object O5. In that case, the direction of the characters is rotated in accordance with the traveling direction of the fifth object O5. Because this message by characters is for a person that is the fifth object O5, the characters are rotated in a direction corresponding to the eye direction of the person.

The position to which the image data including the characters of "STOP" or the text data of "STOP" is to be assigned is adjusted in accordance with the moving speed of the fifth object O5. The projection data determination unit 24 sends, as projection data, assignment information on image data or text data to the projection data setting unit 26, and the projection data setting unit 26 sets the projection data in the visible light source driver 33.

Fig. 12(b) illustrates an emission pattern of the laser light emitted from the laser light source unit 10. A mark depicting a person is projected to the position where the fifth object O5 is present, and the characters O5a of "STOP" are projected to the road surface on the left side of the fifth object O5. Only infrared laser light is emitted to the other positions.

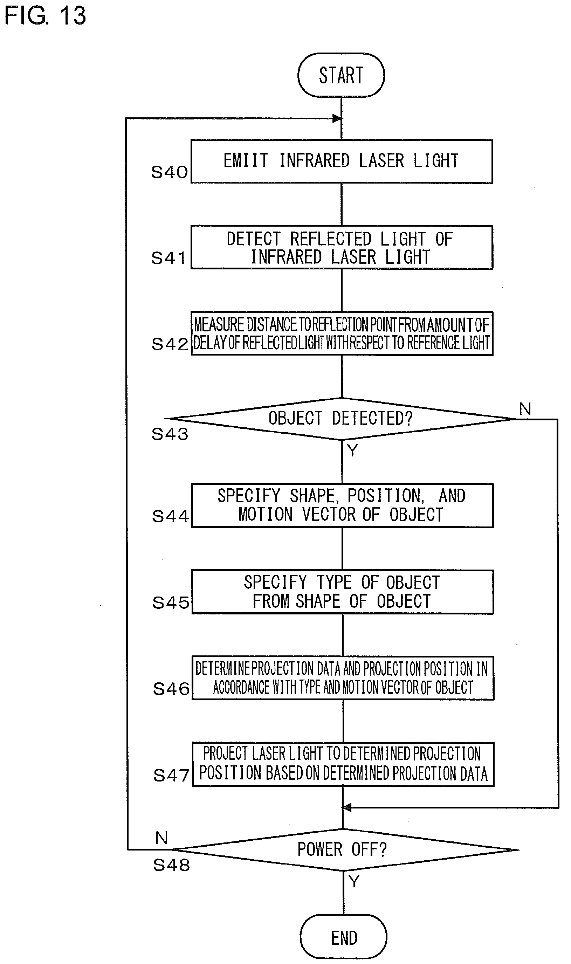

Fig. 13 is a flowchart for explaining the operations of the laser radar device 1 according to Example 4. The infrared laser light source projects infrared laser light to a predetermined emission range ahead of a vehicle (S40). The reflected light detector PD2 detects the reflected light of the infrared laser light (S41). The distance measuring unit 21 detects an amount of delay of the reflected light of the infrared laser light with respect to reference light, and the object recognition unit 22 measures the distance to a reflection point from the amount of delay (S42).

When a scanning position, in which the distance to a reflection point is smaller than a set distance, appears, the object recognition unit 22 determines that an object has been detected (S43). When an object is detected (S43/Y), the object recognition unit 22 specifies the scanning position for the object and the shape of the object. The object recognition unit 22 further specifies the motion vector of the object based on a difference between the obj ect in the present frame and the obj ect in the frame preceding by one (S44). The object recognition unit 22 specifies the type of an object from the shape of the object with reference to the pattern holding unit 23 (S45). The projection data determination unit 24 determines projection data and the projection position for the projection data in accordance with the type and motion vector of the specified object (S46). The projection data setting unit 26 sets, as projection data, the determined image data in the determined projection position. The visible light source driver 33 drives the visible laser light source based on the projection data (S47).

When an object is not detected in Step S43 (S43/N), the processing from Step S44 to Step S47 are skipped. The processing from Step S40 to Step S47, which have been described avove, are repeatedly executed while the laser radar device 1 is being powered (S48/N), and when the laser radar device 1 is turned off (S48/Y), the processing end.

According to Example 4, the same advantages as in Example 1 can be obtained, as described above. Further, a driver can be caused to intuitively recognize the moving direction of an object by projecting additional information indicating the moving direction of the object. Furthermore, a driver can be caused to pay attention to a pedestrian running out, etc., by projecting a message indicating the approach of a vehicle, etc., to a road surface in the traveling direction of the person detected as an object.

The present invention has been described above based on embodiments. These embodiments are intended to be illustrative only, and it will be obvious to those skilled in the art that various modifications to constituting elements and processes could be developed and that such modifications are also within the scope of the present invention.

Examples 1 and 2 may be used in combination with each other. That is, the color of emission light may be determined in accordance with a combination of the distance to an object and the type thereof. Alternatively, the color of emission light may be determined in accordance with a combination of the distance to an object and the size thereof.

In Example 3 and 4, a monochromatic laser diode, not a three-primary color laser diode, may be used as the visible laser light source.

When the measured distance to an object is smaller than a predetermined distance (e.g. , 10 m), the execution of the emission of visible laser light may not be set from the viewpoint of human eye-safe. When the type of an object is one other than a person, visible laser light is emitted toward the object, even when the distance to the object is smaller than a predetermined distance (e.g. , 10 m). Additionally, when an object is a person, visible laser-light may be emitted to a misaligned position such that the light does not hit the eyes of the person, as described above.

When the temperature of an object can be detected, the color of emission light may be changed in accordance with the temperature thereof. For example, when it can be determined from the temperature of an object that the object is a human being or an animal, red laser light may be emitted.

Application examples have been described above, in each of which the laser radar device 1 is installed in a vehicle, but the present invention should not be limited to the application examples. The invention can be applied, for example, to a surveillance camera. In this application example, when an object, such as a person, enters the emission range of the laser radar device 1, visible laser light is emitted to the object.

### [DESCRIPTION OF THE REFERENCE NUMERALS]

- 1: LASER RADAR DEVICE
- 2: EMISSION RANGE
- 10: LASER LIGHT SOURCE UNIT
- DB: BLUE LASER DIODE
- DG: GREEN LASER DIODE
- DR: RED LASER DIODE
- DIR: INFRARED LASER DIODE
- 11: COLLIMATOR LENS
- 12: DICHROIC MIRROR
- 13: DEFLECTION MIRROR
- 14: CONDENSER LENS
- PD1: REFERENCE LIGHT DETECTOR
- PD2: REFLECTED LIGHT DETECTOR
- AP1, AP2: AMPLIFIER
- 21: DISTANCE MEASURING UNIT
- 22: OBJECT RECOGNITION UNIT
- 23: PATTERN HOLDING UNIT
- 24: PROJECTION DATA DETERMINATION UNIT
- 25: PROJECTION DATA HOLDING UNIT
- 26: PROJECTION DATA SETTING UNIT
- 31: SYNCHRONIZING CLOCK SUPPLY UNIT
- 32: INFRARED LIGHT SOURCE DRIVER
- 33: VISIBLE LIGHT SOURCE DRIVER
- 34: SCANNING MIRROR DRIVER

### [INDUSTRIAL APPLICABILITY]

The present invention can be used in an automotive application.

## Claims

1. A laser radar device comprising:
a first light source unit that emits infrared laser light;
a second light source unit that emits visible laser light;
a scanning mirror unit that two-dimensionally scans with infrared laser light emitted from the first light source unit, visible laser light emitted from the second light source unit, or laser light in which both the laser light are superimposed on each other;
a reflected light detection unit that detects reflected light of infrared laser light emitted via the scanning mirror unit; and
an object recognition unit that recognizes an object present within an emission range of the infrared laser light based on reflected light detected by the reflected light detection unit, wherein
when an obj ect is recognized by the obj ect recognition unit, the second light source unit emits visible laser light, which is different in accordance with information on the object, toward the object, a neighborhood of the object, or both the object and the neighborhood of the object.

2. The laser radar device according to claim 1, wherein
the second light source unit is capable of emitting visible laser light having multiple colors, and emits visible laser light having a color different in accordance with a distance to the object.

3. The laser radar device according to claim 1, wherein
the object recognition unit specifies a type of the object based on a shape of the object, and wherein
the second light source unit is capable of emitting visible laser light having multiple colors, and emits visible laser light having a color different in accordance with the type of the object.

4. The laser radar device according to claim 1, wherein
the object recognition unit specifies a type of the object based on a shape of the object, and wherein
the second light source unit emits visible laser light so as to form a display in which the type of the object is reflected.

5. The laser radar device according to claim 1, wherein
the object recognition unit detects a moving direction of the object, and wherein
the second light source unit emits visible laser light so as to form a display in which the moving direction of the object is reflected.

6. A detection method comprising the steps of:
two-dimensionally scanning with infrared laser light emitted from an infrared light source unit via a scanning mirror unit;
detecting reflected light of infrared laser light emitted via the scanning mirror unit;
recognizing an object present within an emission range of the infrared laser light based on the detected reflected light; and
emitting, when the object is recognized, visible laser light, which is different in accordance with information on the object, from a visible light source unit toward the object, a neighborhood of the object, or both the object and the neighborhood of the object.
